# EUROPEAN PATENT APPLICATION

(11) **EP 4 803 299 A1**
(43) Date of publication of application: **09.09.2026**
(21) Application number: 24886112.2
(22) Date of filing: 22.10.2024
(51) Int. Cl.: B32B 9/00, B32B 18/00, C04B 35/584, C04B 35/583, C04B 35/64, B28B 1/16, B28B 11/10, B28B 11/24

(54) **LAMINATE STRUCTURE FOR MANUFACTURING SILICON NITRIDE SUBSTRATE, METHOD FOR MANUFACTURING SILICON NITRIDE SUBSTRATE HAVING REDUCED WARPAGE, AND SILICON NITRIDE SUBSTRATE MANUFACTURED THEREBY**

(30) Priority: 31.10.2023 KR 20230148547
(71) Applicant: OCI Company Ltd., Seoul 04532 (KR)
(72) Inventor: EO, Kyungbok, Seongnam-si Gyeonggi-do 13212 (KR); KIM, Taehong, Seongnam-si Gyeonggi-do 13212 (KR); LEE, Seungyeon, Seongnam-si Gyeonggi-do 13212 (KR); CHI, Eunok, Seongnam-si Gyeonggi-do 13212 (KR); HA, Seunghun, Seongnam-si Gyeonggi-do 13212 (KR)
(74) Representative: Winter, Brandl - Partnerschaft mbB
(86) International application number: PCT/KR2024/016078
(87) International publication number: WO 2025/095437

(57) **Abstract**

Provided is a laminate structure for manufacturing a silicon nitride substrate, comprising: an upper plate; a lower plate; and at least one silicon nitride laminate sheet interposed between the upper plate and the lower plate, wherein the silicon nitride laminate sheet comprises one or a plurality of laminated silicon nitride sheets, and spherical boron nitride is coated on at least one surface of the silicon nitride laminate sheet.

## Description

### [Technical Field]

The present disclosure relates to a laminate structure for manufacturing a silicon nitride substrate, a method for manufacturing a silicon nitride substrate having reduced warpage, and a silicon nitride substrate manufactured thereby.

### [Background Art]

Ceramic materials having high electrical insulation and thermal conductivity may be used as a heat medium for rapidly transferring heat generated by a device. Ceramic materials have been used as substrates for transport device elements, substrates for highly integrated electronic circuits, heat dissipation components for laser oscillators, and reaction vessel and precision mechanical components for semiconductor manufacturing apparatus.

In particular, ceramic substrates used for high-output power devices are required to have high insulation, high dielectric strength, high thermal conductivity, high strength, and a low dielectric constant. Ceramic substrates suitable for these requirements include aluminum nitride substrates, alumina substrates, and silicon nitride substrates.

Silicon nitride (Si₃N₄) substrates exhibit high strength (500 MPa to 800 MPa), high toughness (5 MPa·m to 8 MPa·m), and excellent coefficient of thermal expansion matching with silicon (Si). Furthermore, silicon nitride (Si₃N₄) substrates have high thermal conductivity (70 W/mK to 170 W/mK). That is, silicon nitride (Si₃N₄) substrates are suitable for use as materials for next-generation high-power devices.

### [Disclosure]

### [Technical Problem]

An object of the present disclosure is to provide a method for manufacturing a silicon nitride substrate having reduced warpage, capable of manufacturing a silicon nitride substrate in which a deviation in the content ratio of each component depending on the position is low, warpage is reduced, and deviations in thermal and mechanical properties are reduced.

Another object of the present disclosure is to provide a laminate structure for manufacturing a silicon nitride substrate, the laminate structure being formed in the method for manufacturing the silicon nitride substrate having reduced warpage.

Yet another object of the present disclosure is to provide a silicon nitride substrate which is manufactured by a method for manufacturing a silicon nitride substrate having reduced warpage and in which a deviation in the content ratio of each component depending on the position is low, warpage is reduced, and deviations in thermal and mechanical properties are reduced.

The objects of the present disclosure are not limited to those mentioned above, and other objects and advantages of the present disclosure not mentioned will be understood from the following description and will be more clearly understood from the embodiments of the present disclosure. In addition, it will be readily apparent that the objects and advantages of the present disclosure may be realized by means and combinations thereof set forth in the claims.

### [Technical Solution]

In an embodiment of the present disclosure, there is provided a laminate structure for manufacturing a silicon nitride substrate, comprising: an upper plate; a lower plate; and at least one silicon nitride laminate sheet interposed between the upper plate and the lower plate, wherein the silicon nitride laminate sheet includes one or a plurality of laminated silicon nitride sheets, and
spherical particulate boron nitride is applied onto at least one surface of the silicon nitride laminate sheet.

A cumulative volume particle size D50 of the spherical particulate boron nitride may be 10 µm to 500 µm.

The silicon nitride sheet may comprise yttrium oxide (Y₂O₃), magnesium oxide (MgO), or both.

The silicon nitride substrate may be manufactured by debinding and sintering the laminate structure for manufacturing a silicon nitride substrate.

The manufactured silicon nitride substrate may comprise magnesium (Mg), yttrium (Y), and silicon (Si), wherein a difference between magnesium contents measured at any two points in the silicon nitride substrate may be within 7 mass% relative to a total content of 100 mass% of magnesium (Mg), yttrium (Y), and silicon (Si).

In an embodiment of the present disclosure,
there is provided a method for manufacturing a silicon nitride substrate having reduced warpage, comprising:
forming a slurry by mixing silicon nitride powder, a ceramic additive, and a solvent;
forming a silicon nitride sheet by forming the slurry;
forming a silicon nitride laminate sheet from the silicon nitride sheet;
applying spherical particulate boron nitride onto at least one surface of the silicon nitride laminate sheet;
forming a laminate structure in which at least one silicon nitride laminate sheet is interposed between an upper plate and a lower plate;
performing a debinding process on the laminate structure; and
performing a sintering process on the laminate structure.

The silicon nitride substrate may be formed from the silicon nitride laminate sheet after the debinding process and the sintering process.

The ceramic additive may comprise yttrium oxide (Y₂O₃), magnesium oxide (MgO), or both.

A cumulative volume particle size D50 of the spherical particulate boron nitride may be 10 µm to 500 µm.

The spherical particulate boron nitride may be applied onto at least one surface of the silicon nitride laminate sheet by a wet or dry method.

A boron nitride slurry may be prepared by mixing the spherical particulate boron nitride with a wet solvent and may be applied onto at least one surface of the silicon nitride laminate sheet by a spray method.

The boron nitride slurry may be applied onto one or both surfaces of the silicon nitride laminate sheet using nitrogen pressure, and the wet solvent may then be removed by hot air drying.

The spherical particulate boron nitride powder may be applied onto at least one surface of the silicon nitride laminate sheet.

In an embodiment of the present disclosure, there is provided a silicon nitride substrate comprising magnesium (Mg), yttrium (Y), and silicon (Si), wherein a difference between magnesium contents measured at any two points in the silicon nitride substrate is within 7 mass% relative to a total content of 100 mass% of magnesium (Mg), yttrium (Y), and silicon (Si).

In an embodiment of the present disclosure, there is provided a silicon nitride substrate manufactured by the method for manufacturing a silicon nitride substrate having reduced warpage, wherein a calculated value of ΔZ/L (mm/mm) is 0.0015 or less, where ΔZ/L is a ratio of ΔZ to L, L is a diagonal length (mm) of the silicon nitride substrate having a rectangular shape, measured by scanning with a non-contact three-dimensional measuring instrument, and ΔZ is a difference (mm) between a lowest point and a highest point on one surface of the silicon nitride substrate, measured in a vertical direction from a sample holder.

### [Advantageous Effects]

The method for manufacturing a silicon nitride substrate having reduced warpage according to the present disclosure may manufacture a silicon nitride substrate having a low deviation in the content ratio of each component depending on the position, reduced warpage, and decreased deviation in thermal and mechanical properties.

In addition to the effects described above, specific effects of the present disclosure will be described together with the following description of specific details for implementing the present disclosure.

### [Description of Drawings]

FIG. 1 is a flowchart illustrating a method for manufacturing a silicon nitride substrate having reduced warpage according to an embodiment of the present disclosure.
FIG. 2 to FIG. 4 are schematic diagrams illustrating step (S10) in FIG. 1.
FIG. 5 is a schematic diagram illustrating step (S20) in FIG. 1.
FIG. 6 is a schematic diagram illustrating step (S30) in FIG. 1.
FIG. 7 is a schematic diagram illustrating step (S40) in FIG. 1.
FIG. 8 is a schematic diagram illustrating step (S50) in FIG. 1.
FIG. 9 is a schematic diagram illustrating step (S60) in FIG. 1.
FIG. 10 is a schematic diagram illustrating step (S70) in FIG. 1.

### [Best Mode]

The aforementioned objects, features, and advantages will be described in detail below with reference to the accompanying drawings, and accordingly, those skilled in the art to which the present disclosure pertains will be able to easily implement the technical spirit of the present disclosure. In describing the present disclosure, if it is determined that a detailed description of known technologies related to the present disclosure may unnecessarily obscure the subject matter of the present disclosure, the detailed description thereof will be omitted. Hereinafter, preferred embodiments according to the present disclosure will be described in detail with reference to the accompanying drawings. In the drawings, the same reference numerals are used to indicate the same or similar components.

In the following description, when any configuration is described as being disposed "on (or under)" a component or "on an upper portion (or lower portion)" of a component, it may mean not only that any configuration is disposed in direct contact with a top (or bottom) surface of the component, but also that another configuration may be interposed between the component and any configuration disposed on (or under) the component.

In addition, when a component is described as being "connected," "coupled," or "joined" to another component, it should be understood that while the components may be directly connected or joined to each other, other components may be "interposed" between the respective components, or each component may be "connected," "coupled," or "joined" through another component.

In an embodiment of the present disclosure, there is provided a method for manufacturing a silicon nitride substrate having reduced warpage, comprising:
forming a slurry by mixing silicon nitride powder, a ceramic additive, and a solvent;
forming a silicon nitride sheet by forming the slurry;
forming a silicon nitride laminate sheet from the silicon nitride sheet;
applying spherical particulate boron nitride onto at least one surface of the silicon nitride laminate sheet;
forming a laminate structure in which at least one silicon nitride laminate sheet having boron nitride applied thereon is interposed between an upper plate and a lower plate;
performing a debinding process on the laminate structure; and
performing a sintering process on the laminate structure.

The silicon nitride substrate manufactured by the method for manufacturing a silicon nitride substrate having reduced warpage is a sintered substrate manufactured by a sintering process. Typically, warpage in silicon nitride substrates is caused by a compositional difference between an edge portion and a center portion of a laminate sheet as the sintering process progresses. Additives used to facilitate the liquid-phase sintering of silicon nitride include yttrium oxide, and magnesium oxide. These additive components sublimate during sintering, resulting in a change in their content. However, due to differences in the diffusion rates of these additive components within a silicon nitride laminate sheet, a deviation occurs in the ratio of the additive components between an edge portion and a center portion, resulting in warpage of a silicon nitride substrate.

The substrate whose warpage occurs increases a bonding defect rate in a subsequent process of bonding a metal layer, thereby reducing yield. Therefore, reducing warpage in the silicon nitride substrate is highly important in terms of improving production yield.

The silicon nitride substrate manufactured by the method for manufacturing a silicon nitride substrate having reduced warpage may reduce the occurrence of warpage by reducing such deviations.

Hereinafter, each step of the method for manufacturing a silicon nitride substrate having reduced warpage will be described in more detail.

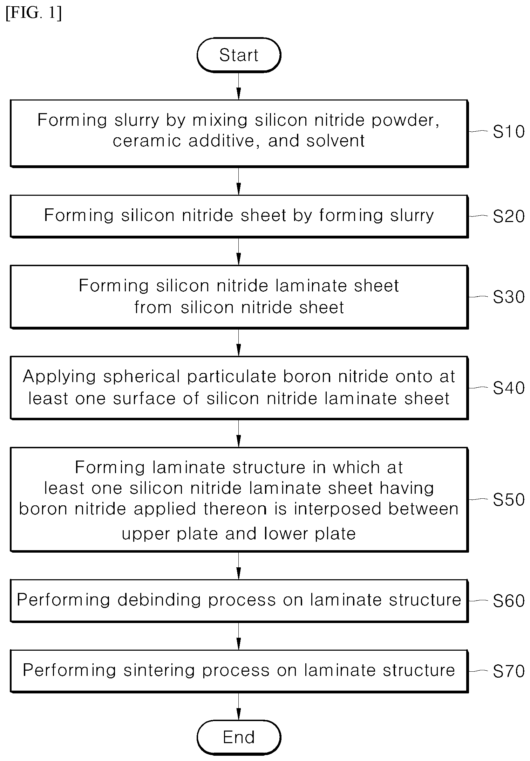

FIG. 1 is a flowchart illustrating a method for manufacturing a silicon nitride substrate having reduced warpage according to an embodiment of the present disclosure. Referring to FIG. 1, the method for manufacturing a silicon nitride substrate having reduced warpage according to an embodiment of the present disclosure may include: a step (S10) of forming a slurry by mixing silicon nitride powder, a ceramic additive, and a solvent; a step (S20) of forming a silicon nitride sheet by forming the slurry; a step (S30) of forming a silicon nitride laminate sheet from the silicon nitride sheet; a step (S40) of applying spherical particulate boron nitride onto at least one surface of the silicon nitride laminate sheet; a step (S50) of forming a laminate structure in which at least one silicon nitride laminate sheet is interposed between an upper plate and a lower plate; a step (S60) of performing a debinding process on the laminate structure; and a step (S70) of performing a sintering process on the laminate structure.

The ceramic additive SA may comprise yttrium oxide (Y₂O₃), magnesium oxide (MgO), or both. The ceramic additive SA may be added to the slurry in the form of powder.

In an embodiment, the ceramic additive SA may comprise magnesium oxide (MgO).

In an embodiment, the ceramic additive SA may further comprise an additional oxide (e.g., zirconium oxide).

The mass ratio of yttrium oxide (Y₂O₃) to the ceramic additive SA may be 0.3 to 0.5. The mass ratio of the magnesium oxide (MgO) to the ceramic additive SA may be 0.5 to 0.7.

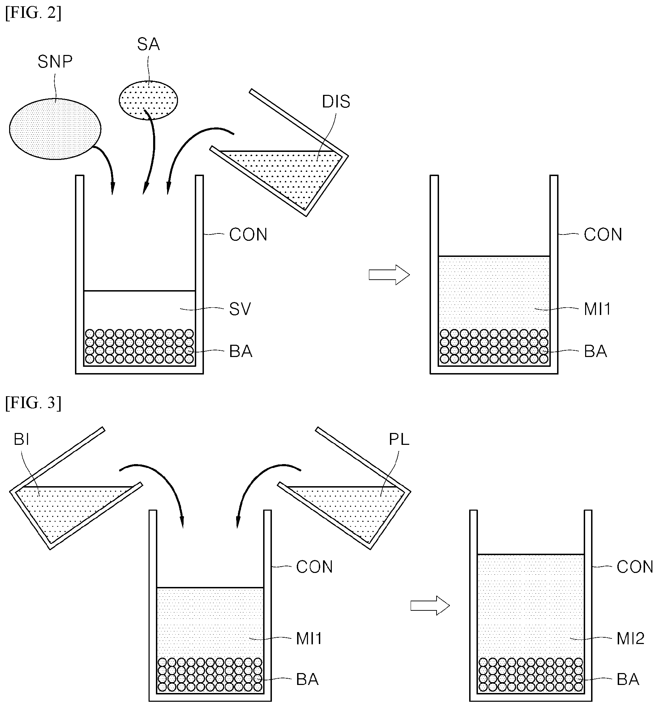

FIG. 2 is a schematic diagram illustrating the step (S10) of forming a slurry by mixing silicon nitride powder, a ceramic additive, and a solvent in FIG. 1.

Referring to FIGS. 1 and 2, a solvent SV and a plurality of balls BA may be provided in a container CON. The solvent SV is an organic solvent and may include, for example, isopropyl alcohol and toluene. Isopropyl alcohol and toluene may be mixed in a volume ratio of 4:6. The balls BA may include silicon nitride.

A first mixture MI1 may be prepared by adding silicon nitride (Si₃N₄) powder SNP, a ceramic additive SA, and optionally, a dispersant DIS to the solvent SV in the container CON. As the dispersant DIS, a commercially available dispersant DIS may be used, for example, BYK-111 manufactured by BYK Chemie, Germany, which is a type of ester-based block copolymer.

The solvent SV may be present in an amount of 40 Vol% to 60 Vol% based on the total volume of the first mixture MI1. The silicon nitride powder SNP may be present in an amount of 15 Vol% to 25 Vol% based on the total volume of the first mixture MI1. The ceramic additive SA may be present in an amount of 5 wt% to 10 wt% based on the mass of the first mixture MI1. More specifically, the ceramic additive SA may be present in an amount of 5 wt% to 7 wt% based on the mass of the first mixture MI1. The first mixture MI1 may include a ceramic additive SA within the above content range, thereby allowing the silicon nitride substrate to have physical properties (e.g., thermal conductivity) at a predetermined level and a purity at a predetermined level.

For the first mixture MI1, the first mixture MI1 may be uniformly mixed by a method such as a ball milling process or a basket milling process. Silicon nitride balls may be used in the ball milling process or the basket milling process. The balls may physically facilitate uniform mixing of the first mixture MI1.

Specifically, the ball milling process may include rotating a container containing the first mixture MI1 at a constant speed using a ball milling machine. As the container rotates, mechanical grinding and uniform mixing may be performed by the balls within the container. The rotation speed of the ball milling machine may be 100 rpm to 500 rpm.

Referring to FIGS. 1 and 3, after the ball milling process, a second mixture MI2 may be prepared by adding a binder BI and a plasticizer PL to the first mixture MI1. The binder BI may include at least one of cellulose derivatives such as ethyl cellulose, methyl cellulose, nitrocellulose, and carboxy cellulose, resins such as polyvinyl alcohol, acrylic acid ester, methacrylic acid ester, and polyvinyl butyral, and mixtures of the derivatives and the resins. For example, the binder BI may include polyvinyl butyral (PVB). The plasticizer PL may include dibutyl phthalate or dioctyl phthalate. The mass of the added plasticizer PL may be about 50% of the mass of the added binder BI. Additionally, a solvent may be added to the first mixture MI1.

For the second mixture MI2, the second mixture MI2 may be uniformly mixed by a method such as ball milling or basket milling. By uniformly mixing the second mixture MI2 through a ball milling process, a slurry SL may be formed (S10). The ball milling process may be substantially the same as, or similar to, the ball milling process described above. Thereafter, the balls may be removed.

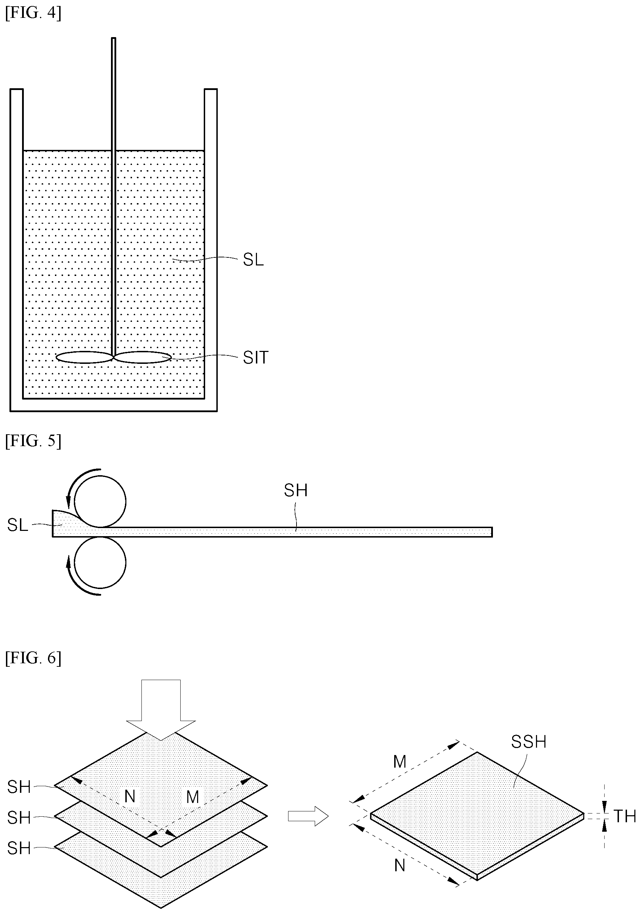

Referring to FIGS. 1 and 4, volatile gases may be removed from the slurry SL by aging the slurry SL formed by the ball milling process. During the aging of the slurry SL, the slurry SL may be stirred using a stirrer SIT. The aging may be performed for about 24 hours.

FIG. 5 is a schematic diagram illustrating the step (S20) of forming a silicon nitride sheet by forming the slurry in FIG. 1.

Referring to FIGS. 1 and 5, a silicon nitride sheet SH may be formed by forming the slurry SL prepared in step (S10) using a tape casting process (S20). Specifically, in the tape casting process, the slurry SL may be poured onto a blade set at a constant dam height, and the slurry SL may be applied onto a moving substrate film. A silicon nitride sheet SH formed body may be obtained by evaporating the solvent from the slurry SL applied onto the substrate film and then peeling it off. The substrate film may be a stainless steel tape, a glassine paper tape, or a polymer tape such as polyester. For example, the slurry SL is poured onto a doctor blade set at a dam height of about 0.3 mm, and the slurry SL may be applied onto a substrate film moving at a predetermined speed (e.g., 0.1 m/min to 1 m/min). Thereafter, a silicon nitride sheet SH may be obtained by performing a drying process and a process of peeling off the substrate film.

The tape casting process may be performed at 30°C to 80°C. The silicon nitride sheet SH formed by the tape casting process may be cut into an appropriate size. The thickness of the silicon nitride sheet SH may be 0.1 mm to 0.5 mm.

The silicon nitride sheet SH may have a size of M x N. Each of M and N may be 60 mm to 300 mm, but is not particularly limited thereto. That is, each of M and N may be changed according to the desired size of the silicon nitride substrate.

FIG. 6 is a schematic diagram illustrating the step (S30) of forming a silicon nitride laminate sheet from the silicon nitride sheet in FIG. 1. A silicon nitride laminate sheet may also be formed by laminating a plurality of silicon nitride sheets. Although it is possible for the silicon nitride laminate sheet to be formed of a single silicon nitride sheet, for convenience, it is collectively referred to as a "laminate" sheet. Hereinafter, a process of forming a silicon nitride laminate sheet by laminating a plurality of silicon nitride sheets will be described by way of example.

Referring to FIGS. 1 and 6, a plurality of silicon nitride sheets SH prepared in step (S20) may be laminated. A silicon nitride laminate sheet SSH may be formed by performing a lamination process on the laminated silicon nitride sheets SH (S30). For example, a silicon nitride laminate sheet SSH may be formed by laminating one to three silicon nitride sheets SH. The lamination process may be performed at a pressure of about 10 MPa and a temperature of about 60°C.

The silicon nitride laminate sheet SSH may be pressurized. The pressurizing process may utilize a warm isostatic press (WIP). The pressurizing process may be performed at a pressure of about 30 MPa and a temperature of about 70°C. Finally, the thickness TH of the silicon nitride laminate sheet SSH may be 0.3 mm to 4 mm.

The silicon nitride laminate sheet SSH may be formed by overlapping the sheets SH each other, and the size of the silicon nitride laminate sheet SSH may also be substantially the same as the size of the sheet SH. In other words, the silicon nitride laminate sheet SSH may have a size of M x N. Each of M and N may be 60 mm to 300 mm.

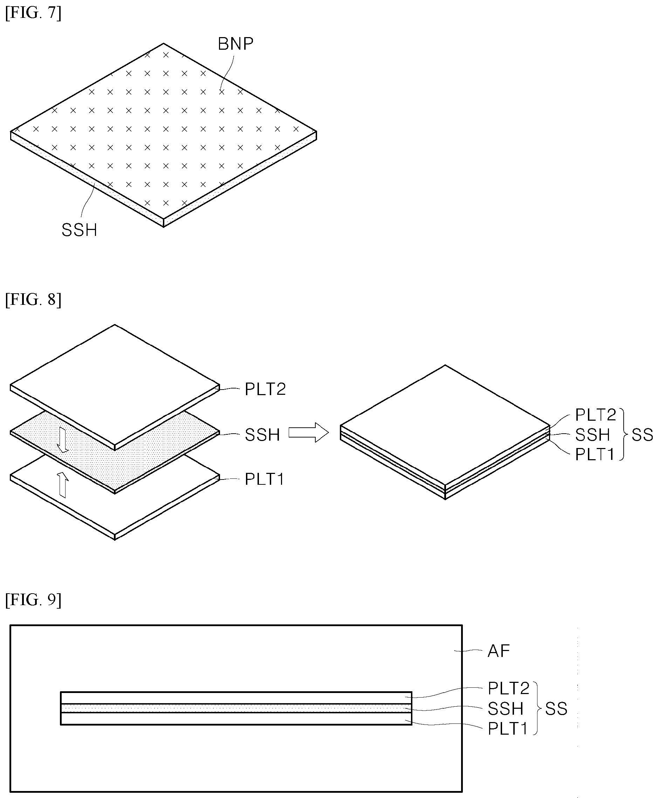

FIG. 7 is a schematic diagram illustrating the step (S40) of applying spherical particulate boron nitride onto at least one surface of silicon nitride laminate sheet in FIG. 1.

FIG. 7 shows a silicon nitride laminate sheet SSH obtained in step (S30), in which spherical particulate boron nitride is applied onto one or both surfaces of the silicon nitride laminate sheet SSH, where BNP represents the applied spherical particulate boron nitride.

Sintering is performed in a crucible in a state in which a plurality of silicon nitride laminate sheets SSH overlap each other (*see* S70). After the sintering, to recover each silicon nitride substrate manufactured from each silicon nitride laminate sheet SSH, boron nitride powders may be applied onto one or both surfaces of each silicon nitride laminate sheet SSH as a release agent by a dry or wet method prior to a debinding process.

In an embodiment, a boron nitride slurry may be prepared by mixing the spherical particulate boron nitride with a wet solvent and may be applied by a spray method. The wet solvent of the boron nitride slurry may be acetone or water. Specifically, the boron nitride slurry may be prepared by dispersing 10 to 20 mass% of boron nitride in acetone. The boron nitride slurry may be dispersed using a ball mill, bead mill, basket mill, or the like. The boron nitride slurry may be applied onto one or both surfaces of the silicon nitride laminate sheet SSH using nitrogen pressure.

After application, the wet solvent of the boron nitride slurry is removed. For this purpose, hot-air drying may be performed at 70 to 90°C.

In an embodiment, the spherical particulate boron nitride may be applied in a dry powder state.

As the spherical particulate boron nitride is positioned between the silicon nitride laminate sheets SSH, a fine space is formed between the silicon nitride laminate sheets SSH. As a sublimation rate of the ceramic additive at a center portion of the silicon nitride laminate sheet SSH becomes similar to that at an edge portion thereof, a difference in composition ratio within the silicon nitride laminate sheet SSH due to the sintering is reduced. As a result, as a ratio of the ceramic additive in the silicon nitride substrate obtained by the sintering becomes relatively uniform, a deviation in physical properties depending on the position in the substrate may be reduced, and warpage of the silicon nitride substrate may be reduced.

In an embodiment, a cumulative volume particle size D50 of the spherical particulate boron nitride may be 10 µm to 500 µm, specifically, 10 µm to 300 µm, and more specifically, 10 µm to 35 µm. By using the spherical particulate boron nitride with the aforementioned particle size, the ratio of the ceramic additive within the silicon nitride laminate sheet SSH may be made uniform due to the sintering, which assists in the manufacture of a silicon nitride substrate having reduced warpage.

The "cumulative volume particle size D50 of particle diameter" may be defined as a particle diameter corresponding to 50% of the cumulative volume, and may be measured using, for example, a laser diffraction method.

The "spherical particle" refers to a particle having an aspect ratio of a shortest axis length to a longest axis length of greater than 0.5. The lengths of the shortest axis and the longest axis refer to the distance between two points where an axis, which is defined as a straight line passing through the center point of the particle, intersects the surface of the particle. The center point of the particle may be a geometric center of volume. In the case of a perfect sphere, the aspect ratio may be 1, but irregular shapes that naturally occur during particle production are not considered significant in the context of the present disclosure, and spherical particles are defined by the aspect ratio.

In an embodiment, the aspect ratio of the spherical particulate boron nitride may be 0.6 or more, 0.7 or more, 0.8 or more, or 0.9 or more.

FIG. 8 is a schematic diagram illustrating the step (S50) of forming a laminate structure in which at least one silicon nitride laminate sheet having boron nitride applied thereon is interposed between an upper plate and a lower plate in FIG. 1.

Referring to FIGS. 1 and 8, a laminate structure SS may be prepared. The laminate structure SS may include a lower plate PLT1, an upper plate PLT2, and a silicon nitride laminate sheet SSH, having boron nitride applied thereon, interposed therebetween. Preparing the silicon nitride laminate structure SS may include interposing the silicon nitride laminate sheet SSH prepared in step (S40) between the lower plate PLT1 and the upper plate PLT2 (S50). If the boron nitride is wet-applied, the wet solvent of the boron nitride slurry is sufficiently removed by hot-air drying, and a plurality of the silicon nitride laminate sheets SSH then overlap each other and are positioned between the lower plate PLT1 and the upper plate PLT2.

The lower plate PLT1 and the upper plate PLT2 may include boron nitride. For example, the lower plate PLT1 and the upper plate PLT2 may be boron nitride plates.

Although FIG. 8 illustrates that a silicon nitride laminate sheet SSH is interposed between the lower plate PLT1 and the upper plate PLT2, the present disclosure is not limited thereto. In an embodiment, two or more laminate sheets SSH may be interposed between the lower plate PLT1 and the upper plate PLT2.

FIG. 9 is a schematic diagram illustrating the step (S60) of performing a debinding process on the laminate structure in FIG. 1.

Referring to FIGS. 1 and 9, a debinding process (Binder Burn Out, B.B.O.) may be performed on the laminate structure SS prepared in step (S50) (S60). Accordingly, all organic substances such as a binder, a dispersant, and a plasticizer in the silicon nitride laminate sheet SSH may be thermally decomposed and removed. In an embodiment, the debinding process may be performed under atmospheric pressure at a predetermined temperature for about 30 hours to 100 hours. For example, the debinding process may be performed in an atmospheric furnace (AF) at a temperature of about 600°C for about 30 hours. That is, the debinding process may be performed under atmosphere (air).

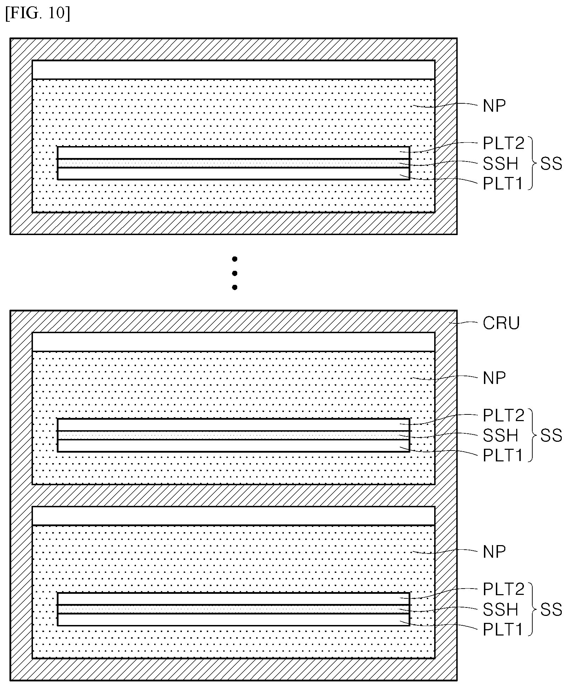

FIG. 10 is a schematic diagram illustrating the step (S70) of performing a sintering process on the laminate structure in FIG. 1.

Referring to FIGS. 1 and 10, after step (S60), the laminate structure SS may be provided in a crucible CRU. By placing bedding powder NP in the crucible CRU, the laminate structure SS may be embedded in the bedding powder NP. The bedding powder NP may include boron nitride powder, silicon nitride powder, or a mixture thereof. When the bedding powder NP includes a mixture of boron nitride powder and silicon nitride powder, the boron nitride powder and the silicon nitride powder may be mixed in a ratio of 1:1. In an embodiment, as shown in FIG. 10, the crucible CRU may be stacked in a multi-stage structure, and a separate laminate structure SS may be provided in each layer within each crucible CRU.

By heating the crucible CRU, a sintering process may be performed on the laminate structure SS (S70). Accordingly, the silicon nitride laminate sheet SSH may be sintered to form a silicon nitride substrate.

In an embodiment, the sintering process may be performed at a temperature of 1,700°C to 2,000°C for 6 hours to 12 hours. For example, the sintering process may be performed at a temperature of about 1,900°C for about 6 hours. The sintering process may be performed in a nitrogen atmosphere. Upon completion of sintering, the silicon nitride laminate sheet SSH may be obtained as a silicon nitride substrate.

The silicon nitride substrate may have a size of M x N, where each of M and N may be 40 mm to 200 mm. In an embodiment of the present disclosure, the silicon nitride substrate may have a size smaller than that of the silicon nitride laminate sheet SSH due to the sintering process.

In an embodiment of the present disclosure,
there is provided a laminate structure for manufacturing a silicon nitride substrate, comprising:
an upper plate;
a lower plate; and
at least one silicon nitride laminate sheet interposed between the upper plate and the lower plate,
wherein the silicon nitride laminate sheet includes one or a plurality of laminated silicon nitride sheets, and
spherical particulate boron nitride is applied onto at least one surface of the silicon nitride laminate sheet.

The laminate structure for manufacturing a silicon nitride substrate may be a laminate structure for manufacturing a silicon nitride substrate manufactured in step (S50) of the aforementioned method for manufacturing a silicon nitride substrate having reduced warpage.

Accordingly, the detailed description of the laminate structure for manufacturing a silicon nitride substrate is as described in the method for manufacturing a silicon nitride substrate having reduced warpage.

A cumulative volume particle size D50 of the spherical particulate boron nitride may be 10 µm to 500 µm.

In the aforementioned method for manufacturing a silicon nitride substrate having reduced warpage, the ceramic additive SA may comprise magnesium oxide (MgO), and thus the silicon nitride sheet may comprise magnesium oxide (MgO). According to the foregoing, the silicon nitride sheet may further comprise components included in the ceramic additive SA in addition to magnesium oxide (MgO).

A silicon nitride substrate may be manufactured by debinding and sintering the laminate structure for manufacturing a silicon nitride substrate.

As the laminate structure for manufacturing a silicon nitride substrate is manufactured by the method for manufacturing the silicon nitride substrate having reduced warpage, in the silicon nitride substrate manufactured by debinding and sintering the laminate structure for manufacturing the silicon nitride substrate, a deviation in the content ratio of each component, for example, a deviation in the content ratio of a magnesium component, depending on the position, is low, warpage of the substrate is reduced, and accordingly, deviations in thermal and mechanical properties are reduced.

In an embodiment, a difference between magnesium contents measured at any two points in the manufactured silicon nitride substrate may be within 7%, specifically within 5%, and more specifically within 3%.

In an embodiment of the present disclosure, there is provided a silicon nitride substrate comprising magnesium (Mg), yttrium (Y), and silicon (Si), wherein a difference between magnesium contents measured at any two points in the silicon nitride substrate is within 7 mass% relative to a total content of 100 mass% of magnesium (Mg), yttrium (Y), and silicon (Si). The silicon nitride substrate may be manufactured by the aforementioned method for manufacturing a silicon nitride substrate having reduced warpage.

In an embodiment of the present disclosure, there is provided a silicon nitride substrate manufactured by the method for manufacturing the silicon nitride substrate having reduced warpage, wherein a calculated value of ΔZ/L (mm/mm) is 0.0015 or less, where ΔZ/L is a ratio of ΔZ to L, L is a diagonal length (mm) of the silicon nitride substrate having a rectangular shape, measured by scanning with a non-contact three-dimensional measuring instrument, and ΔZ is a difference (mm) between a lowest point and a highest point on one surface of the silicon nitride substrate, measured in a vertical direction from a sample holder. The silicon nitride substrate may be manufactured by the aforementioned method for manufacturing a silicon nitride substrate having reduced warpage.

Hereinafter, Examples and Comparative Examples of the present disclosure will be described. The following Examples are merely examples of the present disclosure, and the present disclosure is not limited to the following Examples.

### (Examples)

### Example 1

A silicon nitride substrate was manufactured through the manufacturing method described in FIGS. 1 to 10. The cumulative volume particle size D50 of the spherical particulate boron nitride used was 15 µm. A boron nitride slurry was prepared by mixing the boron nitride powder with a wet solvent and was applied onto both surfaces of the silicon nitride laminate sheet SSH by a spray method. After application, hot-air drying was performed at 80°C to remove the wet solvent from the boron nitride slurry.

### Example 2

A silicon nitride substrate was manufactured in the same manner as in Example 1, except that the cumulative volume particle size D50 of the spherical particulate boron nitride used was 30 µm.

### Comparative Example 1

A silicon nitride substrate was manufactured in the same manner as in Example 1, except that plate-shaped particulate boron nitride (having a cumulative volume particle size D50 of 7 µm) was used instead of the spherical particulate boron nitride used in Example 1.

### (Experimental Examples)

### Warpage Measurement

Warpage was measured in a non-contact manner. A silicon nitride substrate (140 mm x 190 mm x 0.32 mm) manufactured in a rectangular shape was scanned in a diagonal direction of the silicon nitride substrate with a non-contact three-dimensional measuring instrument. ΔZ/L (mm/mm) was defined as the warpage value, where L is a scanned diagonal length (mm), and ΔZ is a difference (mm) between a lowest point and a highest point on one surface of the silicon nitride substrate in a vertical direction from a sample holder.

### Magnesium Content Measurement

The magnesium content was measured using XRF (AZX400, Rigaku Corp.). A 140 mm x 190 mm sample was loaded into the instrument to map the entire substrate. Magnesium (Mg), yttrium (Y), and silicon (Si) were selected as mapping elements, and semiquantitative measurement was performed such that the sum of the three elements was 100%.

In a single measurement, the measurement range was set to Φ 10 mm, and the entire substrate was sequentially mapped to measure the elemental content (mass%) for each region. In this measurement, 109 points were set and the measurement was performed.

The measured values were calculated as a ratio for each region based on the center of the silicon nitride substrate.

The evaluation results of Examples 1-2 and Comparative Example 1 are shown in Table 1.

**[Table 1]**

| | Warpage (mm/mm) | Magnesium Content Ratio | Magnesium Content (wt%) @ Center | Minimum Magnesium Ratio by Region | Maximum Magnesium Ratio by Region |
|---|---|---|---|---|---|
| Example 1 | 0.0010 | ±3% | 1.44 | 0.97 | 1.02 |
| Example 2 | 0.0015 | ±5% | 1.46 | 0.95 | 1.03 |
| Comp. Example 1 | 0.0023 | ±9% | 1.51 | 0.91 | 1.07 |

Compared to Examples 1-2, Comparative Example 1 exhibited greater warpage and a larger deviation in magnesium content. When plate-shaped particulate boron nitride is used, the fine spaces that can be generated by spherical particulate boron nitride are reduced, thereby also reducing the effect of making the sublimation rates of the ceramic additives within the silicon nitride laminate sheet SSH uniform. Accordingly, it can be confirmed that Comparative Example 1 provides inferior effects compared to Examples 1-2.

As described above, the present disclosure has been described with reference to the embodiments, but the present disclosure is not limited by the embodiments disclosed in the present specification. It is obvious that various modifications can be made by those skilled in the art within the scope of the technical spirit of the present disclosure. Furthermore, even if the operational effects according to the configuration of the present disclosure were not explicitly described while describing the embodiments of the present disclosure, it is natural that effects predictable from the corresponding configurations should also be recognized.

## Claims

1. A laminate structure for manufacturing a silicon nitride substrate, comprising:
an upper plate;
a lower plate; and
at least one silicon nitride laminate sheet interposed between the upper plate and the lower plate,
wherein the silicon nitride laminate sheet includes one or a plurality of laminated silicon nitride sheets, and
spherical particulate boron nitride is applied onto at least one surface of the silicon nitride laminate sheet.

2. The laminate structure for manufacturing a silicon nitride substrate according to claim 1, wherein a cumulative volume particle size D50 of the spherical particulate boron nitride is 10 µm to 500 µm.

3. The laminate structure for manufacturing a silicon nitride substrate according to claim 1, wherein the silicon nitride sheet comprises yttrium oxide (Y₂O₃), magnesium oxide (MgO), or both.

4. The laminate structure for manufacturing a silicon nitride substrate according to claim 3, wherein the silicon nitride substrate is manufactured by debinding and sintering the laminate structure for manufacturing a silicon nitride substrate.

5. The laminate structure for manufacturing a silicon nitride substrate according to claim 4, wherein the manufactured silicon nitride substrate comprises magnesium (Mg), yttrium (Y), and silicon (Si), wherein a difference between magnesium contents measured at any two points in the silicon nitride substrate is within 7 mass% relative to a total content of 100 mass% of magnesium (Mg), yttrium (Y), and silicon (Si).

6. A method for manufacturing a silicon nitride substrate having reduced warpage, the method comprising:
forming a slurry by mixing silicon nitride powder, a ceramic additive, and a solvent;
forming a silicon nitride sheet by forming the slurry;
forming a silicon nitride laminate sheet from the silicon nitride sheet;
applying spherical particulate boron nitride onto at least one surface of the silicon nitride laminate sheet;
forming a laminate structure in which at least one silicon nitride laminate sheet is interposed between an upper plate and a lower plate;
performing a debinding process on the laminate structure; and
performing a sintering process on the laminate structure.

7. The method according to claim 6, wherein the silicon nitride substrate is formed from the silicon nitride laminate sheet after the debinding process and the sintering process.

8. The method according to claim 6, wherein the ceramic additive comprises yttrium oxide (Y₂O₃), magnesium oxide (MgO), or both.

9. The method according to claim 6, wherein a cumulative volume particle size D50 of the spherical particulate boron nitride is 10 µm to 500 µm.

10. The method according to claim 6, wherein the spherical particulate boron nitride is applied onto at least one surface of the silicon nitride laminate sheet by a wet or dry method.

11. The method according to claim 6, wherein a boron nitride slurry is prepared by mixing the spherical particulate boron nitride with a wet solvent and is applied onto at least one surface of the silicon nitride laminate sheet by a spray method.

12. The method according to claim 11, wherein the boron nitride slurry is applied onto one or both surfaces of the silicon nitride laminate sheet using nitrogen pressure, and the wet solvent is then removed by hot air drying.

13. The method according to claim 6, wherein the spherical particulate boron nitride powder is applied onto at least one surface of the silicon nitride laminate sheet.

14. A silicon nitride substrate comprising magnesium (Mg), yttrium (Y), and silicon (Si), wherein a difference between magnesium contents measured at any two points in the silicon nitride substrate is within 7 mass% relative to a total content of 100 mass% of magnesium (Mg), yttrium (Y), and silicon (Si).

15. A silicon nitride substrate manufactured by the method for manufacturing a silicon nitride substrate having reduced warpage according to claim 6, wherein a calculated value of ΔZ/L (mm/mm) is 0.0015 or less, where ΔZ/L is a ratio of ΔZ to L, L is a diagonal length (mm) of the silicon nitride substrate having a rectangular shape, measured by scanning with a non-contact three-dimensional measuring instrument, and ΔZ is a difference (mm) between a lowest point and a highest point on one surface of the silicon nitride substrate, measured in a vertical direction from a sample holder.
